# DEMANDE DE BREVET EUROPEEN

(11) **EP 1 224 852 A2**
(43) Date de publication de la demande: **24.07.2002**
(21) Numéro de dépôt: 02364004.8
(22) Date de dépôt: 22.01.2002
(51) Int. Cl.: A01C 23/04

(54) **Dispositif de régulation de débit pour rampe d'épandage de lisier, et application dans une installation pour le traitement du lisier dans une exploitation agricole**

(30) Priorité: 23.01.2001 FR 0100843; 23.01.2001 FR 0100846
(71) Demandeur: SEC-LIS (SARL), 56580 Rohan (FR)
(72) Inventeur: Chicoine, Thierry, 56580 Rohan (FR)
(74) Mandataire: Ballot, Paul

(57) **Abrégé**

Dans une rampe d'épandage plus particulièrement destinée à l'épandage de lisier séparé comportant une pluralité de sorties d'épandage (12) piquées dans une conduite d'alimentation sous pression (11), ce dispositif comprend, équipant chacune desdites sorties d'épandage (12), un ensemble regroupant à la suite d'amont en aval un régulateur de pression dynamique (15), un redresseur de flux (16) et une pastille (17) définissant par son trou central un passage de flux calibré, de manière à assurer en chacune desdites sorties (12) un débit constant et déterminé quelle que soit la pression d'alimentation en entrée dans ladite rampe au-delà d'un seuil prédéterminé.
Application à des installations de traitement du lisier.

## Description

La présente invention concerne un dispositif de régulation de débit plus particulièrement destiné à des rampes d'épandage de lisier séparé, le lisier séparé étant la partie liquide restante du lisier brut dont a été extraite la matière sèche. Elle concerne également ces rampes d'épandage, ainsi que des installations pour le traitement du lisier comprenant ces rampes.

Les rampes utilisées généralement pour l'épandage de lisier séparé sont du type comportant des buses d'atomisation. Ces buses ont pour inconvénient, en créant un brouillard, de casser les molécules de lisier, ce qui a pour conséquence, d'une part de favoriser les échanges microbiens avec l'environnement, et d'autre part de renforcer nettement la génération d'odeurs nauséabondes. Pour fonctionner correctement, elles nécessitent de plus une pression d'alimentation déterminée et pratiquement constante, et malgré cela, la répartition du lisier au sol reste irrégulière.

Ce même problème de répartition au sol se pose avec d'autres rampes prévues plus spécialement pour le lisier brut, qui comportent une tête à rotor alimentant les sorties d'épandage, celles-ci étant classiquement des tuyaux souples avec une partie d'extrémité en pendant sous la rampe.

La présente invention est le résultat d'une recherche d'un nouveau système de rampe d'épandage pour lisier séparé alliant simplicité, efficacité et robustesse, dont le fonctionnement soit assuré par la pression d'alimentation dans la rampe, et qui ait un débit d'épandage constant et adéquatement réparti sur toutes les sorties d'épandage, indépendamment de variations de ladite pression d'alimentation pourvu que celle-ci dépasse un certain seuil.

Ce nouveau système de rampe a été mis au point notamment en vue de son utilisation, conformément à l'invention, dans un nouveau type d'installation de traitement de lisier où un réseau alimenté sous pression en lisier séparé dessert par des bornes de branchement une pluralité de sites d'épandage, et où la pression dans le réseau assure le fonctionnement de la rampe d'épandage connectée à une borne par un tuyau souple traîné sur le sol ; la pression d'alimentation dans la rampe étant par conséquent susceptible de fluctuations importantes, de par les dénivelés éventuels sur les sites d'épandage et dans le réseau lui-même.

Le problème technique que l'invention a résolu provient du fait que le lisier séparé ne se comporte pas hydrauliquement de la même manière qu'un liquide pur tel que de l'eau, du fait supposément qu'il reste assez fortement chargé de particules en suspension, telles que soies de porc.

Ainsi, des essais infructueux ont été effectués en équipant chaque sortie d'épandage d'une rampe d'un ensemble de régulation de débit classique associant un régulateur de pression dynamique et en sortie de celui-ci une pastille définissant un diamètre de passage de flux calibré.

Malgré la médiocrité du résultat, la recherche a été poursuivie dans cette voie, et la solution finalement trouvée consiste en la simple interposition, entre les deux composants précités d'un composant redresseur de flux, qui a modifié radicalement l'efficacité de l'ensemble.

L'invention est donc un dispositif régulateur de débit pour une rampe d'épandage plus particulièrement destinée à l'épandage de lisier séparé comportant une pluralité de sorties d'épandage piquées dans une conduite d'alimentation sous pression couvrant la longueur de la rampe, caractérisé en ce qu'il comprend, équipant chacune desdites sorties d'épandage, un ensemble regroupant à la suite d'amont en aval un régulateur de pression dynamique, un redresseur de flux et une pastille ou rondelle définissant par son trou central un passage de flux calibré, de manière à assurer en chacune desdites sorties un débit constant et déterminé quelle que soit la pression d'alimentation en entrée dans la rampe au-delà d'un seuil prédéterminé.

Dans une forme de réalisation de l'invention, ledit redresseur de flux est un tronçon de profilé à section en croix dimensionnée sensiblement au diamètre de passage du flux.

Selon une autre caractéristique de l'invention, la régulation du débit dans lesdites sorties d'épandage est encore améliorée en prévoyant un écran face au flux dans ladite conduite d'alimentation sous pression de la rampe pour l'orifice d'entrée de chacune des sorties d'épandage, dont la fonction est de dévier les particules en suspension telles que soies de porc.

Dans une forme de réalisation préférée de l'invention, ledit écran est constitué par découpe en sifflet d'une extrémité de portion de tube faisant saillie à l'intérieur de ladite conduite d'alimentation et constituant la partie piquée dans celle-ci de chaque sortie d'épandage.

L'invention concerne également une rampe d'épandage pourvue d'un dispositif de régulation de débit tel que défini ci-dessus, et notamment une telle rampe, caractérisée en ce que chacune de ses sorties d'épandage comporte une portion de tuyau souple en pendant sous ladite conduite d'alimentation sous pression.

L'invention concerne en outre des installations de traitement du lisier pourvues de ces rampes d'épandage.

Dans une forme de réalisation préférée, il s'agit d'une installation pour le stockage, le traitement et l'épandage du lisier comprenant en combinaison :
ladite rampe d'épandage ;
des moyens de stockage primaire pour stocker du lisier brut ;
un dispositif séparateur pour séparer la matière solide du lisier brut d'avec sa partie liquide ;
des moyens de stockage secondaire pour stocker ladite partie liquide ;
un réseau de canalisations desservant par une borne de sortie respective au moins un site d'épandage, lequel réseau est connectable auxdits moyens de stockage secondaire pour être alimenté en pression au moyen d'une pompe d'alimentation en pression ;
ladite rampe d'épandage étant connectable à chacune desdites bornes de sortie par l'intermédiaire d'un tuyau souple, laquelle rampe d'épandage étant telle que définie ci-dessus.

Une telle installation est une solution globalement plus adaptée que les systèmes connus pour le stockage et l'épandage du lisier dans une exploitation agricole.

Elle élimine de nombreux inconvénients que sont selon les cas : une manutention importante en raison de la répétition des aller-retour entre le lieu de stockage et le lieu d'épandage ; un fort marquage du sol avec tassement et création d'ornières ; le problème de la portance du matériel en la période de l'année la plus adéquate pour l'épandage mais également la plus pluvieuse ; les échanges microbiens indésirables et la génération d'odeurs nauséabondes dans un large environnement ; la répartition aléatoire du lisier sur le sol ; des besoins importants en main-d'oeuvre ; des coûts élevés en achat et maintenance de matériel ; etc.

Les caractéristiques et avantages de l'invention mentionnés ci-dessus, ainsi que d'autres, apparaîtront plus clairement dans la description suivante et les dessins joints, dans lesquels :
la Fig. 1 est une vue schématique de derrière représentant dans son ensemble une rampe d'épandage pourvue d'un dispositif de régulation de débit selon l'invention;
la Fig. 2 est une vue schématique, à échelle agrandie, du détail A de la Fig. 1, représentant un dispositif régulateur de débit selon l'invention équipant chaque sortie d'épandage de la rampe de la Fig. 1 ;
la Fig. 3 est une vue de principe schématique d'un premier composant faisant partie du dispositif régulateur de débit de la Fig. 2 ;
les Figs. 4a et 4b sont respectivement une vue de côté et une vue de bout d'un second composant faisant partie du dispositif régulateur de débit de la Fig. 2 ;
les Figs. 5a et 5b sont respectivement une vue de côté et une vue de dessus faisant partie du dispositif régulateur de débit de la Fig. 2 ;
la Fig. 6 est une vue de principe très schématique d'une installation selon l'invention pour le stockage, le traitement et l'épandage de lisier ; et
la Fig. 7 est une vue schématique de dessus illustrant le travail d'épandage sur un site d'épandage au moyen d'une installation telle que représentée à la Fig. 6.

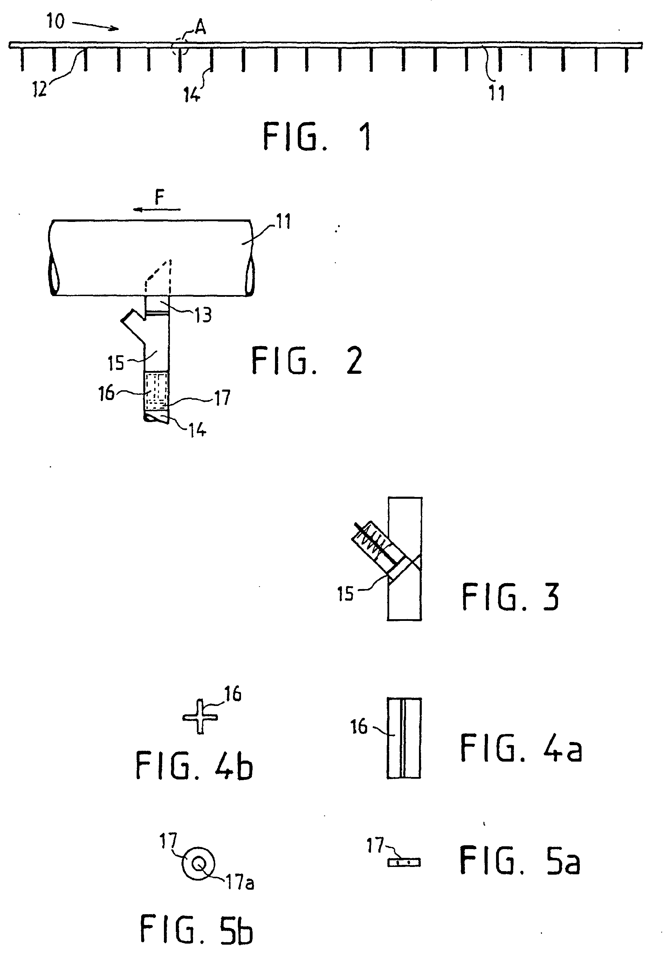

La rampe d'épandage 10 de la Fig. 1 est par exemple d'un type connectable à des moyens d'alimentation sous pression, d'une manière connue en soi, au moyen d'un tuyau souple de longueur adéquate à traîner sur le sol.

Comme le montre la Fig. 1, la rampe 10 présente une pluralité de sorties d'épandage 12, comprenant chacune une portion de tuyau souple en pendant 14 communément appelée "pendillard", et une portion de tube amont 13, Fig. 2, piquée sur la conduite d'alimentation 11 couvrant toute la longueur de la rampe 10.

Selon l'invention, la rampe d'épandage 10 est pourvue de moyens régulateurs de débit pour assurer en chacune de ses sorties 12 un débit d'épandage qui est prédéterminé, constant quelle que soit la pression dans la conduite d'alimentation 11 au-delà d'un certain seuil, et de préférence identique pour toutes les sorties, lesquels moyens régulateurs de débit consistent pour chaque sortie d'épandage 12 en un montage en série interposé entre la portion de tube amont 13 et la portion de tuyau souple 14, et réunissant d'amont en aval des premier, second et troisième composants 15, 16 et 17 représentés respectivement à la Figs. 3, aux Figs. 4a et 4b et aux Figs. 5a et 5b.

Le premier composant 15 est un régulateur de pression dynamique dont la fonction est d'assurer, lorsqu'il est traversé par un flux, une pression de sortie déterminée et constante quelle que soit la pression d'entrée au-delà d'un certain seuil, par exemple de l'ordre de 1 à 1,5 bar. Il n'a été représenté que très schématiquement, car il s'agit d'un composant classique du commerce, par exemple un modèle intermédiaire de la marque PLANET proposé au catalogue d'équipement d'irrigation et systèmes goutte-à-goutte de la Société NETAFIM.

Le second composant 16 a pour fonction de redresser le flux en sortie du régulateur de pression 15. Tel que représenté, le redresseur de flux 16 est avantageusement un tronçon de profilé à section en croix dimensionnée au diamètre de passage du flux.

Le troisième composant 17 est une pastille ou rondelle définissant par son trou central 17a un diamètre de passage du flux calibré pour assurer un débit déterminé en fonction de la pression d'entrée.

En variante, le second composant, à savoir le redresseur de flux interposé entre le régulateur de pression 15 et la pastille 17, peut être un conduit de diamètre intérieur seulement légèrement supérieur à celui du trou 17a de la pastille 17, par exemple 12 mm pour 10 mm, et de longueur relativement conséquente, de préférence de l'ordre de vingt fois ledit diamètre intérieur, ou plus.

En outre, préférentiellement et comme représenté à la Fig. 2, la portion de tube amont 13 de chaque sortie d'épandage 12 est piquée dans la conduite d'alimentation 11 de manière à faire saillie à l'intérieur par son extrémité correspondante coupée en sifflet pour constituer au bénéfice de son orifice d'entrée un écran de protection face au flux dont le sens est indiqué par la flèche F sur le dessin. Cet agencement a pour fonction d'empêcher le passage dans les sorties d'épandage 12 de particules restées dans la partie liquide du lisier, telles des soies de porc, ces particules étant déviées et transitant jusqu'en extrémité de la conduite d'alimentation d'où elles peuvent être extraites après épandage.

Avec une telle rampe selon l'invention, il suffit que la pression d'alimentation en lisier dépasse un seuil prédéterminé, qui est en pratique de l'ordre de 1,5 bar pour obtenir un débit déterminé constant, ce qui signifie notamment qu'en disposant d'une pression de par exemple 6 bars à la sortie d'alimentation en lisier à laquelle la rampe est raccordée, il est possible d'assurer ce débit d'épandage déterminé et constant malgré un dénivelé de terrain pouvant atteindre 40 mètres, de même qu'il est possible, dans les virages à 180° en bout de parcelle de fermer les sorties d'épandage de la moitié de la rampe 10 à l'intérieur du virage sans que le débit des sorties d'épandage de l'autre moitié de la rampe soit modifié.

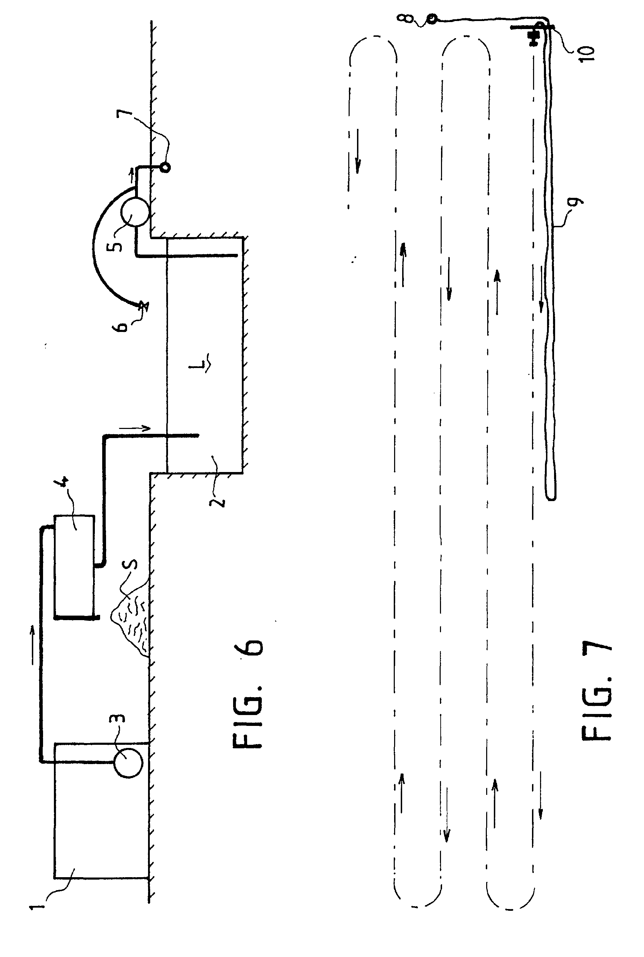

A la Fig. 6, est illustrée en ce qu'elle a d'essentiel une installation selon l'invention pour le stockage, le traitement et l'épandage du lisier, telle qu'elle peut être implantée dans toute exploitation agricole comportant un lieu bâti et des terrains ou sites d'épandage plus ou moins distants de ce lieu bâti.

Les sites d'épandage sont desservis par un réseau de canalisations (seulement représenté par une entrée de branchement et désigné par la référence 7 à la Fig. 6), de préférence enterré, et capable de supporter une forte pression interne, à titre indicatif de l'ordre de 15 bars, une borne de branchement de sortie 8, Fig. 7, étant prévue pour chaque site d'épandage. Le réseau 7 peut être un réseau préexistant d'adduction d'eau d'irrigation ou d'arrosage, étant donné que dans le cadre de l'invention, il n'aura à transporter que du lisier séparé, c'est-à-dire uniquement sa partie liquide insusceptible d'induire au-delà de la normale des risques d'encrassement et d'obstruction des canalisations.

A proximité de l'entrée du réseau 7, l'installation comprend un moyen de stockage primaire 1 et un moyen de stockage secondaire 2, respectivement représentés à la Fig. 6 sous la forme d'une cuve et d'une fosse. La cuve de stockage primaire 1 recueille le lisier brut en provenance des bâtiments d'élevage, tandis que la fosse de stockage secondaire 2 reçoit seulement la partie liquide du lisier. Pour le remplissage de la fosse 2, un circuit est établi entre celle-ci et la cuve 1, qui comporte une pompe 3 pour puiser le lisier brut, et un séparateur 4 pour en extraire la matière sèche S de la partie liquide L.

D'autre part, la fosse de stockage secondaire 2 est connectable à l'entrée du réseau 7 par un circuit comprenant une pompe 5 d'alimentation en pression du réseau 7. A titre indicatif, la pompe 5 peut par exemple appliquer en entrée du réseau 7 une pression pouvant atteindre jusqu'à 10 à 12 bars. Et de préférence, comme représenté sur le dessin, il est prévu un dispositif limiteur de pression 6 entre la pompe 5 et l'entrée du réseau 7, débitant en retour dans la fosse 2.

La Fig. 2 illustre dans leur globalité les moyens d'épandage de l'installation selon l'invention, s'agissant d'une rampe d'épandage 10 portée ou traînée derrière un tracteur, et connectable à chaque borne 8 du réseau 7, d'une manière connue en soi, au moyen d'un tuyau souple 9 de longueur adéquate traînant sur le sol.

La rampe 10 est du type précédemment décrit, en référence aux dessins 1 à 5b.

Dans tous les sites d'épandage desservis par une borne 8 du réseau 7, le fonctionnement de la rampe 10 est assuré par la pression dans le réseau 7, établie au moyen de la seule pompe d'alimentation en pression 5. Néanmoins, en cas de besoin, il est toujours possible d'utiliser une pompe d'appoint en sortie d'une borne 8 pour fournir la pression d'alimentation adéquate à la rampe 10, par exemple en présence de dénivelés trop important dans le réseau 8, ou bien encore si celui-ci ne peut supporter une pression interne trop élevée, ce qui peut être le cas d'un réseau préexistant. A noter que la pompe 5 peut être tout à fait classique et donc bon marché, par exemple et avantageusement de type centrifuge.

Naturellement, préalablement à l'épandage, à tous les stades du processus suivi le long de l'installation sus-décrite, le lisier peut être soumis à des traitements supplémentaires de natures diverses, mécanique, physico-chimique, biologique, etc.

## Revendications

1. Dispositif régulateur de débit pour une rampe d'épandage (10) plus particulièrement destinée à l'épandage de lisier séparé comportant une pluralité de sorties d'épandage (12) piquées dans une conduite d'alimentation sous pression (11) couvrant la longueur de la rampe (10), **caractérisé en ce qu'**il comprend, équipant chacune desdites sorties d'épandage (12), un ensemble regroupant à la suite d'amont en aval un régulateur de pression dynamique (15), un redresseur de flux (16) et une pastille ou rondelle (17) définissant par son trou central (17a) un passage de flux calibré, de manière à assurer en chacune desdites sorties (12) un débit constant et déterminé quelle que soit la pression d'alimentation en entrée dans la rampe (10) au-delà d'un seuil prédéterminé.

2. Dispositif selon la revendication 1, **caractérisé en ce que** ledit redresseur de flux (16) est un tronçon de profilé à section en croix dimensionnée sensiblement au diamètre de passage du flux.

3. Dispositif selon la revendication 1, **caractérisé en ce que** ledit redresseur de flux est un conduit de diamètre intérieur seulement légèrement supérieur à celui du trou (17a) de la pastille (17), et de longueur relativement conséquente.

4. Dispositif selon la revendication 3, **caractérisé en ce que** la longueur dudit conduit est de l'ordre de vingt fois ledit diamètre intérieur, ou plus.

5. Dispositif selon l'une des revendications 1 à 4, **caractérisé en ce qu'**il comprend en outre un écran face au flux dans ladite conduite d'alimentation sous pression (11) pour l'orifice d'entrée de chacune des sorties d'épandage (12), dont la fonction est de dévier les particules en suspension telles que soies de porc.

6. Dispositif selon la revendication 5, **caractérisé en ce que** ledit écran est constitué par découpe en sifflet d'une extrémité de portion de tube (13) faisant saillie à l'intérieur de ladite conduite d'alimentation sous pression (11) et constituant la partie piquée dans celle-ci de chaque sortie d'épandage (12).

7. Rampe d'épandage, **caractérisée en ce qu'**elle est pourvue d'un dispositif de régulation de débit selon l'une des revendications 1 à 6.

8. Rampe d'épandage selon la revendication 7, **caractérisée en ce que** chacune de ses sorties d'épandage (12) comporte une portion de tuyau souple (14) en pendant sous ladite conduite d'alimentation sous pression (11).

9. Installation pour le traitement du lisier, **caractérisée en ce qu'**elle comprend une rampe d'épandage selon la revendication 7 ou 8.

10. Installation selon la revendication 9, destinée au stockage, au traitement et à l'épandage du lisier, et **caractérisée en ce qu'**elle comprend en combinaison :
une rampe d'épandage (10) ;
des moyens de stockage primaire (1) pour stocker du lisier brut ;
un dispositif séparateur (4) pour séparer la matière solide du lisier brut d'avec sa partie liquide ;
des moyens de stockage secondaire (2) pour stocker ladite partie liquide ;
un réseau de canalisations (7) desservant par une borne de sortie respective (8) au moins un site d'épandage, lequel réseau (7) est connectable auxdits moyens de stockage secondaire (2) pour être alimenté en pression au moyen d'une pompe d'alimentation en pression (5) ;
ladite rampe d'épandage (10) étant connectable à chacune desdites bornes de sortie (8) par l'intermédiaire d'un tuyau souple (9).

11. Installation selon la revendication 10, **caractérisée en ce que** la pompe (5) pour alimenter en pression le réseau (7) à partir des moyens de stockage secondaire (2) est une pompe de type centrifuge.

12. Installation selon la revendication 10 ou 11, **caractérisée en ce qu'**il est prévu entre la pompe d'alimentation en pression (5) et l'entrée du réseau (7), un dispositif limiteur de pression (6).
